# EUROPEAN PATENT APPLICATION

(11) **EP 3 736 760 A1**
(43) Date of publication of application: **11.11.2020**
(21) Application number: 19173164.5
(22) Date of filing: 07.05.2019
(51) Int. Cl.: G06Q 30/06, G06Q 50/06

(54) **AUTOMATED TRANSACTION PROTOCOL LINKING RENEWABLE ENERGY GENERATION ASSETS TO ENERGY POWER CONSUMERS APPLYING DISTRIBUTED DIGITAL LEDGER TECHNOLOGY AND IOT ENERGY METERS**

(71) Applicant: Cosol Condominio Solar Ltda, 41940-570 Salvador, BA (BR)
(72) Inventor: SULYOK, Csaba, 04016-035 Sao Paulo, SP (BR); LUPO LEITE, Kaique, 13566-500 Sao Carlos, SP (BR)
(74) Representative: Danubia Patent & Law Office LLC

(57) **Abstract**

A computer system (100) for matching energy production with energy consumption through a blockchain system, in which consumers may have nodes with limited computational power or storage capacity while keeping the required level of security. The system comprises a plurality of energy producers (110) to introduce energy into an energy distribution system; a plurality of energy consumers (120) for consuming energy received from the energy distribution system; an energy distribution system (150) for distributing energy from the plurality of energy producers (110) to the plurality of energy consumers (120); and a distributed blockchain application arranged to link energy introduced by the plurality of energy producers (110) with energy consumed by the plurality of energy consumers (120) by recording transfers of energy tokens associated with said introduced energy, energy which must be certified by the IoT meter (316), in a blockchain. The distributed blockchain application is further arranged to link a monetary value paid by an energy consumer (120) for purchased energy with a monetary value paid to an energy producer (110) for sold energy by recording transfers of monetary tokens associated with said exchange of monetary value in a blockchain. The monetary tokens represent a monetary value expressed in real currency or cryptocurrency, and the energy tokens contain information relating to the monetary value of the associated unit of energy, wherein the monetary value of the energy unit is expressed by the amount of monetary tokens.

## Description

### FIELD OF THE INVENTION

The present invention relates to a protocol to connect power plants, consumers and other players involved on the production and distribution of renewable energy, empowering a shared PV system. More particularly, the present invention relates to computer implemented systems and methods for creating, validating and managing blockchain tokens. These tokens are responsible for creating a unique database to be used and maintained by all participants on the renewable energy production and distribution chain. Cryptography and consensus strategy cooperate in order to create this "trustless " network, where it is possible to guarantee and track the renewable origin of the energy being produced in a cheaper and automated manner without the need to trust the system since all information in it can be verified by any concerned party to the system.

### BACKGROUND OF THE INVENTION

In many countries, renewable energy, like solar energy, plays a continuously increasing portion of its energy matrix. Currently, the energy industry is largely non-transparent to end-users. The provenance of electricity, for example, conveyed to the consumers is still not known for the consumers, therefore they have no chance to learn the different forms of energy production (e.g. renewable or fossil energy production) and thus to distinguish themselves. The consumers have no opportunity to express their preferences for a specific type of energy source.

At least on the side of energy consumers, there is a demand on higher transparency into the energy production and distribution so that they can select the source of energy they are buying. There are known improvements on identifying and tagging specific amounts of energy, like electricity, generated by various producers at the point of production by using blockchain systems. In these solutions, each tag is represented by a blockchain token, herein referred to as an energy token, and can be assigned to the energy consumers by the energy producers or distributors along with matching amounts of energy.

The energy sale management systems using blockchain technology are therefore valuable because they allow the consumers to distinguish which forms of energy production are offered to them. Although units of energy appear physically identical at the point of consumption, the choice of the consumers in the energy management system may determine which form of energy production they support by their money. The use of energy tokens offers the consumers a high degree of visibility, which allows them to influence the energy industry by expressing their preference for any specific form of energy production, such as the renewables.

The present invention is partly based on the use of energy tokens that allow energy distribution companies to link the energy they deliver to the consumers with a specific form of production. Thus the invention allows the energy consumers to express their preference for any specific forms of energy production, e.g. renewable energy production.

Recently, various improved energy sale management systems have been developed using blockchain technology. The main features of the blockchain systems used in energy sale management are summarized below.

### Blockchain Database System

The great challenge of a distributed system is to keep a database synchronized and secure among all system participants. One solution to this problem is the data structure called blockchain which provides a database of blocks connected sequentially forming a large chain shared by all users involved in the distributed system. Thus, a distributed system using a blockchain and a consensus algorithm can provide:
- the elimination of intermediaries, making the negotiation process more efficient through smart contracts;
- increased security due to immutability of data;
- cryptographic validation and authentication strategies;
- a reduced risk of attacks since attacks are more difficult in a distributed system than in a centralized system;
- lower cost as compared to the cost of centralized databases that require multiple servers;
- transaction history that can be audited by any person or institution.

Therefore, the use of a blockchain with a consensus algorithm offers a secure distributed system that enables the exchange of transactions between participants without the need for a central intermediary to verify and approve the transactions. It is important to note that the blockchain network concepts are constantly evolving, making its application increasingly stable, secure and efficient compared to conventional distributed systems.

### Smart contracts

Within a blockchain network, it is possible to create so-called "smart contracts" that are programs executed within the network in order to perform some type of pre-defined automated transactions. In this way, it is possible to create simple or complex contracts making clear conditions of purchase or service. After a contract is sent to the network, all of its "clauses" (transactions) are executed autonomously, as scheduled, in a transparent environment, without conflicts and without an intermediary. These transactions can carry out exchange of money, properties, stocks or any object of value.

A smart contract is created by a programming language and compiled into a binary computer program code. The compiled program code is then sent to the blockchain where each client, in addition to the blockchain database, keep a data structure, called memory area, for each smart contract executed. In this memory area, the smart contract variables are stored, and for each different state of the data structure, a hash code is generated and stored as a transaction in the blockchain.

### Consensus Protocols

For the implementation of a network that uses the blockchain data structure as a database, various tools and algorithms can be combined in different ways, which results in a wide range of implementation possibilities each with its advantages and disadvantages.

The first important point for choosing the network architecture is the consensus algorithm. A consensus algorithm is responsible for performing operations between the participating nodes of the network so that transactions can be validated and inserted into the blockchain. Currently, the best-known algorithms are: Proof-of-Work, Proof-of-Stake and Proof-of-Authority.

Proof-of-Work is the most commonly used algorithm today because it was the first to be implemented successfully within the Bitcoin network. Although it represents a major revolution that made the Blockchain network concept possible, it has some disadvantages, such as high power consumption, the need for very powerful computers (miners) to perform validation operations, and a low number of transactions carried out over a period of time compared to the conventional electronic payment systems such as credit cards.

Proof-of-Stake is a concept that has gained great visibility because it solves the cited energy consumption problem. Instead of mining, an algorithm selects participants with greater quantity of assets to validate the blocks. The assumption is that a participant who has many assets in the network does not intend to make it unstable because it would consequently lose the value of its own assets. The problem with this model is that it is not possible to track the participant's assets outside the network, so it is possible that even though this participant is being considered one of the richest one on the network, this amount is a small percentage of all his or her assets. In this way, it would have no problem making the network unstable.

The Proof-of-Authority solves the above-mentioned problems by requiring a valid identity for all participants. In this way, validators can be chosen through some predefined criteria and all their actions are public, including possible attacks. Thus, individuals who have their identities (and reputations) at stake, being responsible for validating transactions, are encouraged to preserve the network.

### Implementations and technologies

A blockchain is a data structure that must be accompanied by a consensus algorithm to become a viable application that has all the required security features mentioned above. Each implementation, in general, represents a network of nodes connected to each other following the rules imposed by their implementation. For example, the most common implementation of smart contracts is called Ethereum.

Ethereum is used by the vast majority of developers and users who are looking for smart contracts that run in blockchain. This is because it is a generic network in which almost any application can be built, called Dapps (decentralized applications). For the creation of intelligent contracts and consequently of the Dapps, the language Solidity is usually used.

It should be noted that all the rules and characteristics of an Ethereum network are directly related to how each node of this network is implemented. In this way, it is possible to combine these nodes in different ways, generating different communication networks. Thus, the Ethereum has several test networks (with false tokens), including the networks Ropsten, Kovan, Rinkeby and Sokol, and a main network called ETH, each with its characteristics and objectives.

Besides the nodes can be combined in different ways, they can be implemented by different applications. As there are no servers in the network, all nodes are clients and their behaviour depends on the specific implementation. The most well-known implementations of the Ethereum ecosystem include go-ethereum, Parity, cpp-ethereum and pyethereum, although the first two are the most commonly used, respectively.

To be part of an Ethereum network, the client must be a full-node, that is, i.e. it must download the entire blockchain starting from the first block and perform all checks before the blockchain can be synchronized with the network. Currently, the ETH core network is 92 GB in size and is growing day by day indefinitely. This makes the use of the network possible only by the devices having relatively high storage capacity, increasingly tending the centralization of the network around servers and consortium of servers that offer centralized access services to the network and mining. This characteristic demonstrates that the main objective of blockchain, which is to keep a distributed system decentralized, becomes increasingly diffuse.

Thinking about the above limitations of blockchain systems, the community has suggested some solutions that generally revolve around the use of thin clients, less data storage, and pruning of historical records. In general, all of these concepts seek to deal with the large amount of old records (i.e. blocks) that are no longer useful for applications but are required to check the state of the blockchain and maintain its security.

For example, the Parity Light Protocol (https://wiki.parity.io/The-Parity-Light-Protocol-(PIP)) seeks to solve these problems using some concepts:
- *Canonical Hash Trie* (CHT): This protocol maps the block numbers to their canonical hashes in a Merkle tree. In this way, it is possible to register which nodes have already been validated by the network at a certain point and thus enable the exclusion of the blocks and headers themselves after a time interval.
- *ReqId*: As a light client will not keep the blocks, access to information should be done in the form of network request. On the other hand, a request in a blockchain network may offer high latency. The protocol *ReqId* offers the possibility to perform a number of simultaneous requests, to decrease the latency and to increase security due to immutability of data.
- *Pruning using CHT*: In addition to light clients, CHT can also be used on full nodes. This can be done in block intervals (for example, in every 2048 blocks) in which each interval has its corresponding CHT. In this way, these nodes can eliminate a significant amount of nodes while maintaining their respective CHTs.
- *Kademlia Node Identifier*: The previous concept, if followed by 100% of the complete nodes, would result in the loss of historical blocks. To resolve this problem, the protocol Kademlia Node Identifier or other similar protocols (such as hash ranges) may be used to require that each full node hold the blocks within a certain range. If a node disobeys this guideline, it is penalized.

Another protocol that seeks to similarly solve the blockchain size problem is the so called *mini blockchain scheme.* This scheme is based on maintaining the following three fundamental characteristic of the currently used functional blockchain systems:
- management of account balances, token ownership record: it maintains the balance of each non-empty account in a hash tree (such as CHT) and excludes the blocks that performed the transaction.
- coordination of the network in order to process transactions: it has a blockchain that does not keep the oldest transactions, only the most recent ones. The oldest transactions are computed in the hash tree and deleted.
- maintain proof-of-work algorithm: when nodes discard old blocks, specific headers are kept to be possible to calculate the cumulative major difficulty, calculation this pillar of the proof-of-work algorithm.

Although solutions for complete or full nodes are still in the research phase, some intermediate solutions do exist for network access without the need to have a node. However, these solutions do not offer real decentralization since they use server structures for the various requisitions. The most famous service that allowed the creation of several systems based on the Ethereum network is the *Infura*, maintained by *ConsenSys.* It is noted that this service does not modify any blockchain implementation, it only creates a layer above the network allowing access in a client-server form. Taking advantage of Infura, *Metamask* is a browser plug-in that allows access to web applications that use the Ethereum network (to perform transactions and smart contracts) so that the end-user does not need to have a node in his device much less any kind of low-level configuration. The idea is that when accessing the web application, an automatic communication starts with Metamask in a transparent way to the client. In addition, Metamask also offers a number of functions for portfolio management.

Reverting to the energy market, in many countries the relationship between the consumers and the energy producers, for example power plants of renewable energy, exists by contracts created through bureaucratic processes. Even though the consumers can receive energy direct from specific power plants using these contracts, the only manner to confirm the amount of energy produced and distributed to the consumer is trusting on third party companies that use different methods to offer this service. Moreover, it is difficult to guarantee and trust the renewable origin of the energy without a unique protocol used by all parties involved in the energy production, the energy distribution and the energy consumption.

The document US 2010/0218108 A1 describes a centralized system for presentation and management of different types of energy-related information. The document US 2011/0138377 A1 describes a method and a system for remotely managing processes of a renewable energy monitoring system through the internet. The document US 2016/0033986 A1 describes a physical system to direct the flow of energy from one or more power sources to one or more energy consuming devices using a communication system.

The document WO 2017/199053A1 describes a blockchain tag system to link actual renewable energy production with cryptographic tokens, suggesting a framework to check the real origin of the energy and a platform to buy and sell energy tokens.

Although the majority of the above cited documents describe useful solutions, they fail to address a unique protocol capable of monitoring, controlling, certificating, purchasing and selling energy in a system that is implemented in a distributed system. Even the document WO 2017/199053 A1, which describes a distributed database system based on the blockchain technology, fails to provide a solution about how the blockchain system could be efficiently used, in particular by consumers having limited computational power or storage capacity. Furthermore, the energy sale management system described in this document assumes the presence of intermediary entities, like a wholesale market or a retailer, between the energy producers and the energy consumers, which renders the selling process more complicated and less transparent.

### SUMMARY OF THE INVENTION

The present invention addresses to eliminate at least one of the above mentioned drawbacks of the prior art solutions.

Firstly, it is an object of the present invention to provide systems and methods for matching energy production with energy consumption through a blockchain system, in which consumers may have nodes with limited computational power or storage capacity while keeping the required level of security of the blockchain system.

Furthermore, it is an object of the present invention to provide systems and methods for matching energy production with energy consumption through a blockchain system, in which beyond the energy tokens, monetary tokens are also used for allowing the sale and the purchase of energy tokens within the system.

It is another object of the present invention to provide the proof-of-origin and trackability of all generated volume of energy.

Furthermore it is an object of the present invention to provide systems and methods for matching energy production with energy consumption through a blockchain system, in which the blockchain infrastructure is flexibly scalable.

It is yet another object of the present invention to provide systems and methods for matching energy production with energy consumption through a blockchain system, in which direct and easier access to the protocol is possible by means of additional functionalities of the blockchain system.

Due to the monetary digital token, all possible conflicts related to a sale will be handled by the blockchain protocol and will be automatically verified by every participant.

These and other objects are achieved by providing a computer system for matching energy production with energy consumption through a blockchain system, the system comprising:
- a plurality of energy producers to introduce energy into an energy distribution system;
- a plurality of energy consumers for consuming energy received from the energy distribution system;
- an energy distribution system for distributing energy from the plurality of energy producers to the plurality of energy consumers; and
- a distributed blockchain application arranged to link energy introduced by the plurality of energy producers with energy consumed by the plurality of energy consumers by recording transfers of energy tokens associated with said introduced energy in a blockchain,
wherein the distributed blockchain application is further arranged to link a monetary value paid by an energy consumer for purchased energy with a monetary value paid to an energy producer for sold energy by recording transfers of monetary tokens associated with said exchange of monetary value in a blockchain, and wherein the monetary tokens represent a monetary value expressed in real currency or cryptocurrency, and the energy tokens contain information relating to the monetary value of the associated unit of energy, wherein the monetary value of the energy unit is expressed in the amount of monetary tokens.

The above objects are further achieved by providing a method for matching energy production with energy consumption through a blockchain system running on a plurality of computer nodes associated with at least a plurality of energy producers and a plurality of energy consumers. The method comprises the steps of:
- identifying the production of individual units of energy by an energy producer;
- identifying the consumption of volumes of energy by an energy consumer;
- providing a plurality of energy tokens in the blockchain system, an energy token representing an individual unit of energy;
- providing a plurality of monetary tokens in the blockchain system, a monetary token representing a monetary value expressed in real currency or cryptocurrency;
- associating an amount of monetary tokens with each energy token;
- matching, via the blockchain system, the individual units of energy produced by the energy producer with the volumes of energy consumed by the energy consumer by transferring a number of energy tokens from the energy producer to the energy consumer; and
- updating, via the blockchain system, the monetary balance of the energy producer and the monetary balance of the energy consumer on the basis of the amount of monetary tokens associated with the energy tokens transferred in the matching step.

The various embodiments of the system and the method according to the inventions are defined by the dependent claims.

The systems of the present invention are suitable for connecting power plants and consumers, and optionally other entities of the energy sale process, involved in the production, distribution and consumption of energy, such as renewable energy. The methods of the invention are intended to store energy sale management information and to sell and buy energy in specific amounts via a distributed database without any centralized control or maintenance by one or more entities (e.g. organizations, authorities, companies or persons). The invention explores cryptography, blockchain technology and peer-to-peer network technology to build a fully automated, computer-implemented energy sale management system which is powered by a consensus strategy between the participants connected to each other through an otherwise trustless computer system environment.

Since in the systems according to the present invention the two kinds of proprietary cryptographic tokens represent both monetary and production transactions, by using the invented method with these tokens, all changes are relayed to all participants and maintained by them, creating a unique distributed database to be used by all participants involved in the overall energy sale system. Due to the joint use of energy tokens and monetary tokens, the system can guarantee tracking of the origin of the energy produced by certain types of producers, like renewable energy, in a cheaper and automated manner.

Various objects, features, aspects and advantages of the inventive subject matter will become more apparent from the following detailed description of preferred embodiments, along with the accompanying drawing figures in which like numerals represent like components.

### BRIEF DESCRIPTION OF THE DRAWINGS

Figure 1 schematically illustrates the main components a distributed energy provision system used in connection with the present invention.
Figure 2 is a schematic block diagram of the computer architecture of the energy sale management system according to the present invention.
Figure 3 schematically illustrates the main components of an energy producer forming part of the distributed energy provision system shown in Figure 1.
Figure 4 schematically illustrates the main components of an energy consumer forming part of the distributed energy provision system shown in Figure 1.
Figure 5 schematically illustrates the main components of a computing platform used by an additional entity forming part of the distributed energy provision system shown in Figure 1.
Figure 6 is a flow diagram showing the mains steps of managing energy sale using a blockchain system according to the present invention.

### DETAILED DESCRIPTION OF THE INVENTION

### System architecture

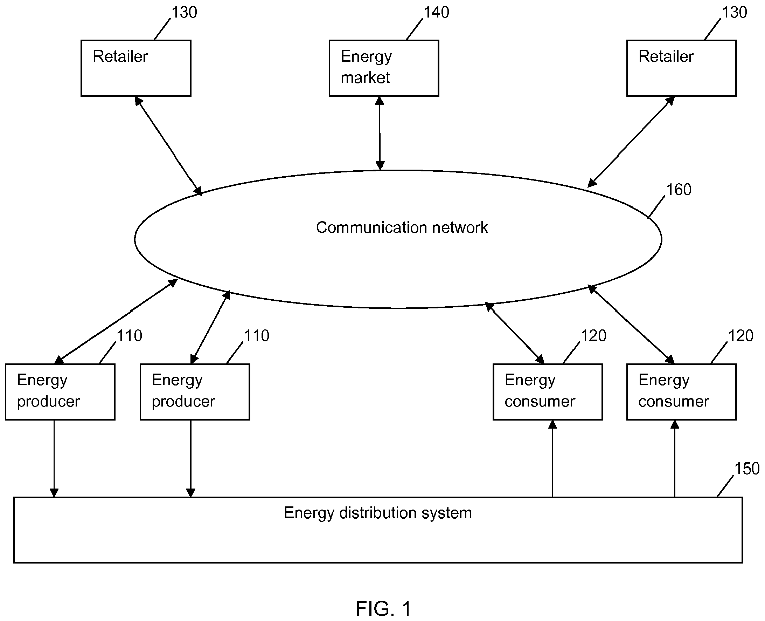

The architecture of an energy provisioning system 100 is schematically illustrated in Figure 1. This system 100 may be used with the energy sale management system according to the present invention. The system 100 includes a plurality of energy producers 110 (also referred to as "producers") and a plurality of energy consumers 120 (also referred to as "consumers"). As also shown in Figure 1, the system 100 may further include energy distributing entities 130, like wholesale agents, retailers, utility companies, etc.. The energy is delivered from producers 110 to the consumers 120 through an energy distribution network 150, like an electrical grid or a gas distribution network. Each of the participants of the system 100 operate a computer node connected to a communication network 160, through which the blocks of the blockchain, each representing an energy sale management transaction, are shared by a particular participant with all other participants or transmitted from one or more participants to a requesting participant. Each of the energy producers 110 involves a special authority function to control the energy sale business over the entire system 100.

Consumers 120 are the end-point, the ones who consume energy in their homes or small to medium-sized businesses. The energy producers 110 are responsible for power plants that generate energy that seek to lease them to the consumers 120. The energy producers 110 are required to operate full nodes, i.e. nodes with full blockchain functionality. An energy consumer 120 may use either a full node or any one of various light nodes with reduced computational and/or storage capacity as it will be described later.

The system 100 may also involve an electronic energy marketplace 140 (also referred to as "marketplace"). The relationship between a consumer 120 and a producer 110 starts through the marketplace 140 where a consumer 120 can choose the producer 110 it prefers within its energy distribution region, taking into account, for example, the origin of the energy and other sale parameters. When a producer 110 is selected, a new sale process is established in the system 100. By means of the new sale process, the marketplace 140 may offer the consumer 120 a set of predefined smart contracts, including e.g. a prepaid model, or may enable the establishment of contracts proposed by the consumers 120 without the need of any technical knowledge on the consumer's side. The marketplace 140 then uses the common blockchain protocols to insert the smart contracts into the blockchain and begins its execution (its validity).

After the agreement between a producer 110 and the consumer 120 is consolidated, all participants of the system 100 can access the most diverse information related to the energy sale process associated with the contract, such as energy consumption and energy delivery through the energy distribution network, like the electric grid, in real time by means of the blockchain protocols. So any other participant of the system 100 can access this information via an appropriate computer-implemented application, such as a web interface or a mobile application, without the need of detailed technical knowledge of the system 100 itself. For the implementation of these types of applications, the participants should use programming APIs for the computer network services that can work together with the protocols of the blockchain of the system 100.

### Network architecture

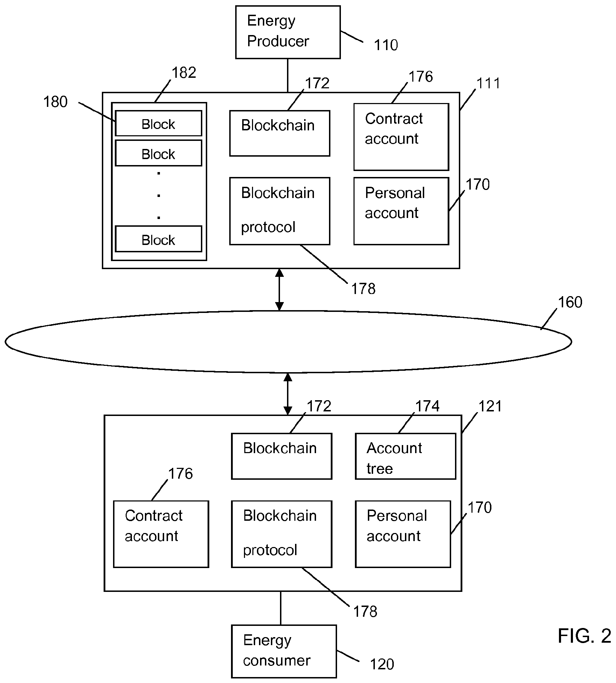

Figure 2 is a schematic block diagram showing the computer architecture of the energy sale management system 100 according to the present invention. As mentioned before, each participants, like energy producers 110 and energy consumers 120 shown in Figure 2, operate a respective node 111, 121 which is embodied in a computer device running a specific computer program for carrying out operations in the blockchain 172 of the system 100 according to the applied blockchain protocol 178. The nodes 111, 121 are interconnected via the communication network 160 and thus form a computer network (also referred to as "network") suitable for managing the blockchain 172 of the system 100.

A node may be implemented as a full node which can carry out all blockchain operations, or a simplified node with a reduced set of available blockchain operations. The simplified nodes are typically used by participants, the computing platform of which has strongly limited computational power and/or strongly limited storage capacity.

The full nodes are configured to apply all of the security elements of the blockchain protocol 178. This means that they are adapted for maintaining all of the system data so that all of the actions performed in relation to the blockchain 172 can be checked independently by each full node. Each of the energy producers 110 has to use a full node in order to be in conformity with the blockchain protocol 178. In this way, the overall system 100 can be kept safe as the blockchain will always have at least one complete version within the system as stored in a full node.

Unlike the full nodes used by the energy producers 110, the simplified nodes do not participate in the protocol 178 with full functionality, although they are still capable of tracking the network status and performing certain blockchain transactions. For a simplified node, it is not necessary to keep all the system data (i.e. a complete version of the blockchain) that are anyway maintained by the full nodes, so a simplified node can be implemented on devices with limited computing power and/or limited storage space, such as smartphones, embedded systems or even at a web browser. Simplified node can be used only by the consumers 120. However, even if not all the system data are stored in the simplified nodes, the synchronization of their reduced blockchain with the network (i.e. with a complete version of the blockchain) is necessary to carry out so that the checks can still be done independently by the particular simplified node. Depending on the way how these status checks are carried out, the simplified nodes can be classified as so called "light nodes" and so called "nano nodes". The difference in their functionalities and operation will be described in detail later.

### Distributed file system

When a participant performs an operation that requires evidence of facts from the physical world through documents, all of the data relating to the particular operation shall be stored in a distributed manner in the blockchain. To this end, a distributed file system is maintained in the network as a part of the blockchain protocol. Initially, a file itself is stored at both the node of the document's owner and the interested counter-party or parties. For each file, a hash code is generated and associated with all operations that require proof that the document provides. When a participant other than the two above-mentioned parties requires access to the file, a request for the hash code is sent to the network (i.e. a request message is broadcast to all other nodes of the network), and the nodes who have the same file will return their copy of the file to the requesting node. It is important to note that initially, only the first two nodes involved in the first verification procedure will have the files. When other nodes request this file, it is stored in the cache of those nodes and is accessible by any other node until it is overwritten by another file. Another important issue is that these files only prove some real-world situation and are considered additional information, that is, they are not necessary for the operation of the blockchain protocol. Moreover, an inaccessible file is not necessarily a problem because, as physical contracts, those nodes which are responsible for such evidence should keep copies of this file. Any evidence in which all network nodes are interested, is maintained by the blockchain system as part of the protocol.

### Consensus Protocol

While the distributed database provided by the blockchain allows all participants of the energy sale management system to share the data produced by the system in the various transactions, a specific protocol, a so-called *consensus protocol* is used to guarantee, among other characteristics, that every participant stores the same data sets by specifying the way how the data are inserted into the blockchain and permanently maintained in the blockchain for a substantially long time.

The participants of the system take turns to distribute the blocks in the network, through a random algorithm that uses a hash code of the previous block as a seed. All other participants confirm the arrival of the block. If there is any problem in receiving a block, a penalty may be applied to the sending participant. The penalty may be agreed upon by most other participants. In addition, the hash code of the previous block is added to the hash code of the block preceding the previous block in the blockchain, and the result will be recorded as a new seed for the random selection algorithm to be used by a participant responsible for the distribution of the next block.

### Tokens

The blockchain of the system according to the present invention uses two types of cryptographic tokens, namely energy tokens and monetary tokens. The energy tokens allow the proof-of-origin and trackability of all produced volume of energy. As all units of energy are mapped to an energy token, all pieces of origin-related and trading-related information associated with a particular unit of energy are stored in the energy tokens. After mapping, the tokens enable all subsequent processes to be automated and verifiable by the blockchain protocol. These processes are known as on-chain operations because every participant of the system, through their respective nodes, will receive, verify and endorse the insertion of the operations on the blockchain.

The monetary token has the function to enable the sale and purchase of energy tokens on the basis of the automated contracts. The monetary tokens are also created and enforced by the applied blockchain protocol. Therefore all possible conflicts related to a sale will be handled by the protocol and automatically verified by every participant.

The monetary tokens are generated by the energy producers. New monetary tokens are initially owned by the energy producers which, in turn, sell the monetary tokens to the consumers. Each monetary token has a price determined in a real currency, and upon purchasing a monetary token, the consumer pays to the issuing energy producer for the token in a conventional payment system, e.g. online payment card transaction or wire transfer. Since the consumers use the monetary tokens to purchase energy tokens, the consumers will return the monetary tokens to the energy producers and the process of selling the monetary tokens can start again.

The energy tokens are generated by the energy producers having a built-in authority function, however, this transaction must be allowed and certificated by an IoT energy meter device embedded in an energy producer platform. Such an IoT device could be implemented in several ways provided that its readings are certified by a known (to the protocol) certification organization and its readings are directly sent to the network by using the protocol of the method according to the present invention. The certification is needed at this stage because the readings are off-chain operations (physical world operation), which means that their verification cannot be handled directly by means of a purely digital process.

That means the energy tokens created by an IoT device are not inserted into the blockchain by this device directly, but instead, by the energy producers initially owning the tokens. This coin insertion process is called *coinbase* and it can only be performed by a particular energy producer when the given energy producer is the responsible producer in the associated consensus protocol cycle. Therefore, the responsible producers, which anyway motivated to insert its own tokens into the blockchain, also inserts all the other transactions created by other participants into the blockchain at any time. This is an important feature of the blockchain protocol because due to this mechanism, the producers will always be motivated to maintain the protocol in a working state.

### Accounts

For a transaction to occur within the energy sale management system, a sender node and a recipient node are required. To this end, as shown in Figure 2, in each node 111, 121 a so-called personal account 170 is stored, the personal account including a public key considered as the address, and a private key used to provide access to the tokens for their respective owner. That means all personal accounts 170 are encrypted. The part of the protocol that holds the private key for access to tokens is often called the Wallet. It should be noted that the private keys are stored in the nodes 111, 121 in an encrypted form with blocking by a user-specific password or PIN code. If a private key is lost, all tokens associated therewith will also be lost, therefore this type of procedure is very delicate.

### Smart Contracts

As mentioned above, the smart contracts are computer programs executed within the network in order to perform various types of pre-defined automated transactions. Like other components of the blockchain system, smart contracts run on the node of all participants, thus ensuring the decentralization of the procedure and the validation of each step of the automation by any participants.

To execute a smart contract, a contract account of the particular contract type is created in the associated nodes of the contracting parties, the contract account having a public key, but not having a private key. When a certain transaction occurs, it is sent to the node holding the contract's public key (serving as an address) in conjunction with the clause information to be executed. From there, the clause is executed with the parameters and the respective tokens are sent to the other participants by the transaction in order to modify the memory area and generate new transactions, such as the transfer of tokens.

For an energy producer to have the authority functionality, it must create a smart contract of the power plant type, in which all validation procedures are described. After all the initial clauses have been fulfilled, the smart contract becomes valid and digitally represent the power plant in the network. All operations related to the power plant will be done between the accounts and the power plant's smart contract. Thus, not only simple transactions are validated by the blockchain system but also all the logic related to the business plan of a power plant.

Many smart contract variables need to receive information from off-chain sources, such as an IoT device, for analyzing the energy production. As this is an off-chain situation, the verification cannot be done using the trustless protocols offered by the blockchain of the energy sale management system. However, the blockchain protocol used in the system according to the present invention is based on the idea of certification to offer more consistent and trusted real-world data sources to the network. Thus, in addition to checking the blockchain protocol, the nodes should check the certificates associated with each data source similarly to HTTPS page certificates.

### Account tree

Every transaction is stored in a block of a blockchain 172 stored in a node 111, 121. However, in a long term, the number of blocks and transactions might cause challenges to the storage space of the nodes. This problem could be solved by using a so-called *account tree.* In an account tree 174, for each block of the blockchain stored in a given node 111, 121, a tree with the public keys of each account also maintains and updates the balance of tokens of the respective accounts modified in that block. In this way, after an initial synchronization, it is no longer necessary to maintain the complete blockchain in a node to reach the balance of all the participants as it is enough to keep a shortened blockchain 172 comprising the last few blocks only. However, it is important to note that this kind of light synchronization, where only the account tree 174 is updated, is only allowed for the simplified nodes, i.e. the light nodes and the nano nodes. The full nodes are not allowed to use the option of light synchronization since they serve as the entities which hold and update a complete version of the blockchain 172 of the system. However, at each transaction cycle, the full nodes also update their account trees and also distribute them to other nodes. In addition, the authority function of the energy producers responsible for the consensus cycle adds the hash code of the current account tree to the new block so that it can be verified and validated by all participants.

### Consensus blocks

In addition to the account tree 172, another functionality that seeks to enable the use of light and nano nodes is the use of so-called *consensus blocks.* For each regular transaction block, an additional consensus block 180 is specifically created at one of the energy producer nodes 111. In a consensus block 180, specific state information of the blockchain system is recorded and each of the consensus blocks are voted by all other energy producers for verification reasons. A consensus block 180 may contains information relating to, for example, the updated list of the authority entities within the energy producer nodes 111, the updated account trees 172 and event logs that occurred on the previous consensus cycles and blocks. This means that if a consumer node 121 is about to perform synchronization with the network, it is enough to use only the consensus blocks 180 to recover the actual account tree 172 of the system.

The functionality of the light nodes and the nano nodes can be distinguished depending on how the synchronization is performed using the consensus blocks.

In case of a light node, when receiving a new transaction block, the last version of the account tree 172 is to be obtained, therefore the complete list 182 of the consensus blocks 180 is requested from the network to update its own account tree 172. The local account tree 172 of the node 121 will then be updated on the basis of the account tree based on the entire list 182 of the consensus blocks 180 received from the producer nodes 111 of network in response to the request. During the recovery process, the consensus blocks 180 are sequentially checked until reaching the firstly generated consensus block, which belongs to the genesis block of the complete blockchain. Thus, the consumer node 121 can check the entire account tree of the network. In addition, the consensus blocks 180 can be used as rollback points if any significant problem occurs in the network. The verification of the account tree 172 of a node 121 may include comparing the local account tree's hash code with the hash code of the account tree of the transaction block recently received from the network.

In case of a nano node, the checks are made only for the transaction blocks that have been received after an initial synchronization. However, for the synchronization, it is not necessary to check the network up to the consensus block 180 associated with the genesis block of the blockchain. In this case, the last consensus block 180 with its account tree is the only requested from the network. In this way, a nano node initiates its checks after receiving the last consensus block 180, receiving the following blocks normally and being able to maintain only the block headers after verification in the same was as the light nodes do. In this case, the security of the system is not complete and the network cannot be verified in a completely independent manner. In response to the request of a nano node for the last consensus block 180 through the network, said block will be sent to the requesting node by a number of producer nodes 111 that have their identities at stake. Therefore, nano nodes require much less computing power and storage capacity than the full nodes, and still somewhat less computing power and storage capacity than the light nodes. So a nano node can be implemented in web applications, mobile phones and embedded computer systems in the form of small libraries within more robust applications that use the network data for some purpose.

### Pruning

Even for a full node, the amount of files stored in the node can be very high in long term and can raise substantial operational costs. Therefore, the applied blockchain protocol provides a pruning function that can be performed at certain intervals. This function allows a full node to keep only the most recent blocks while storing only the headers of the preceding blocks without keeping a complete version of the preceding blocks. However, it is important to note that the preceding blocks thus removed by the pruning operation will not be lost, but they will be stored by backup systems jointly operated by the participants, thus providing a balance between security and efficiency.

At the same time, the account tree of the networks will ensure that the balances at the nodes are correct. It is noted that a full node may also apply the pruning function to remove the old blocks from its own copy of the blockchain.

### Platforms

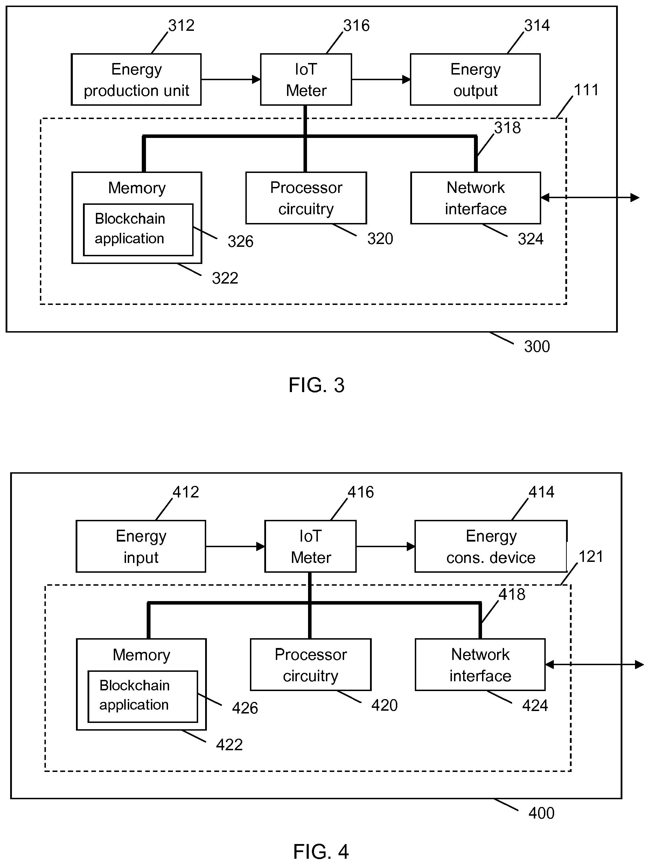

As schematically shown in Figure 3, the energy producers operate a producer platform 300 including an energy production unit 312 that produces energy, such as electricity. The structure of the energy production unit 312 is determined by the form of production of energy. For example, in a solar farm, the energy production unit 312 is a solar panel, in a wind farm, the energy production unit 312 is a wind turbine, in a coal-fired power station, the energy production unit 312 is a steam turbine, in a nuclear power station, energy production unit 312 is a nuclear reactor, or in a hydroelectric power station, energy production unit 312 is a water turbine.

The energy produced by the energy production unit 312 is supplied through an energy output 314 to the energy distribution system. The amount of energy introduced into the energy distribution system is measured by an IoT meter 316. The IoT meter 316 is also connected to the computer node 111 of the energy producer via a data communication line 318. The node 111 comprises a processor circuitry 320, a memory 322 and a network interface 324. The configurations of the processor circuitry 320, the memory 322 and the network interface 324 are well known in the art, therefore their detailed description is omitted herein. The memory 322 stores a peer blockchain application 326 configured to perform the blockchain operations according to the applied blockchain protocol.

Figure 4 schematically illustrates the main components of a consumer platform 400 comprising an energy input 414 via which the energy is received from the energy distribution system. The energy is consumed by an energy sink device 412 and an IoT meter 416 is used to measure the consumed amount of energy. In this example, the IoT meter 416 may be is a smart meter and may be interconnected by a data communication line 418 to the computer node 121 of the energy consumer. The node 121 comprises a processor circuitry 420, a memory 422 and a network interface 424. The configurations of the processor circuitry 420, the memory 422 and the network interface 424 are well known in the art, therefore their detailed description is omitted herein. The memory 422 stores a peer blockchain application 426 configured to perform the blockchain operations according to the applied blockchain protocol.

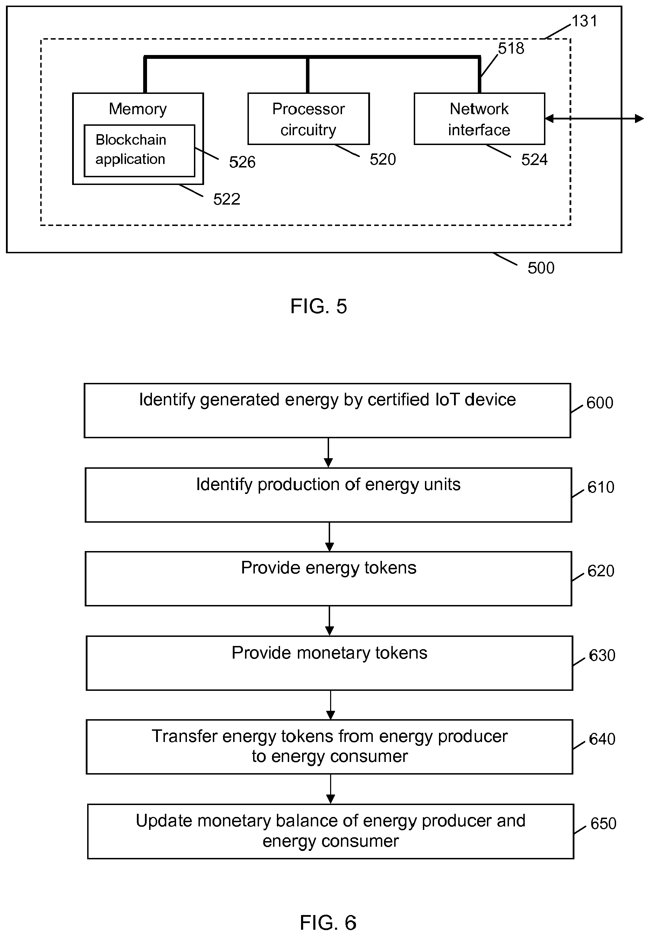

Figure 5 schematically illustrates the main components of the platform 500 of a supplementary entity, like a retailer. This platform 500 is embodied in a computer node 131 that comprises a processor circuitry 520, a memory 522 and a network interface 524. The configurations of the processor circuitry 520, the memory 522 and the network interface 524 are well known in the art, therefore their detailed description is omitted herein. The memory 522 stores a peer blockchain application 526 configured to perform the blockchain operations according to the applied blockchain protocol.

Figure 6 illustrates a flow diagram including the main steps of the method according to the present invention. The method is executed in a distributed computer system for matching energy production with energy consumption through a blockchain system. The blockchain application is running on a plurality of computer nodes associated with at least a plurality of energy producers and a plurality of energy consumers, although in some embodiments, additional nodes associated, for example, with retailers and other service providers, may also be included in the distributed computer system.

As a first step 600 of the method, the generated energy is identified by a certified IoT device, and then in step 610, the production of individual units of energy is identified by an energy producer.

For managing the sale of energy from an energy producer to an energy consumer, a plurality of energy tokens are provided in the blockchain system in step 620, wherein an energy token represents an individual unit of energy. Similarly, in step 630, a plurality of monetary tokens are also provided in the blockchain system, wherein a monetary token represents a monetary value expressed in real currency or cryptocurrency. In the blockchain system, a specific amount of monetary tokens is associated with each energy token, thus the monetary value of an energy token is determined indirectly, through the use of monetary tokens.

When a consumer intends to purchase energy, the individual units of energy produced by an energy producer chosen by the consumer with the volumes of energy to be consumed by the energy consumer are matched by transferring a number of energy tokens from the chosen energy producer to the energy consumer via the blockchain system in step 640.

Once the energy token have been transferred to the consumer, the monetary balance of the energy producer and the monetary balance of the energy consumer are updated using the blockchain system on the basis of the amount of monetary tokens associated with the transferred energy tokens in step 650.

In one embodiment of the method, a list of linked consensus blocks is generated, stored and maintained in the computer node of at least one energy producer of the blockchain system, wherein each consensus block is associated with a respective block of the blockchain and contains at least information relating to an account tree of the blockchain valid at the moment of generating the respective consensus block.

It is preferred that only the last few blocks of the system's blockchain is stored in at least one of the computer nodes and when such a node is synchronizing to the network, it obtains the entire list of consensus blocks from one or more authority entities integrated into the energy producer nodes for updating its local account tree.

Additionally or alternatively, at least one of the computer nodes may be configured to store only the last few blocks of the system's blockchain, and when synchronizing to the network, it obtains only the last consensus block from one or more authority entities integrated into the energy producer nodes for updating its local account tree.

The distributed blockchain application can either work with a preset number of tokens or can include functionality for generating new tokens. In the present system, only the peer blockchain application of the computing platform of the energy producers has token issuing functionality. As described, new monetary tokens are initially owned by the energy producers - when a new power plant is constructed, new monetary tokens are issued. The energy producers will then, in turn, sell the monetary tokens to the consumers. As for the generation of new energy tokens, the IoT meter of an energy producer platform measures the energy introduced into the energy distribution system by that energy producer and send information on the measurements to the computing platform of the energy producer. In response to the measurements, the energy producer issues a corresponding number of energy tokens. Finally, the consumer will use the monetary tokens to purchase energy tokens within the system.

As discussed above, according to the invention each energy token is associated with an amount of energy introduced into the energy provision system, and each monetary token is associated with an amount of money used to pay for the energy tokens. This means that in the system according to the invention, the energy tokens do not store monetary information relating to the associated unit of energy, instead the monetary tokens carry a monetary value expressed in real currency or cryptocurrency and the energy tokens contain information relating to the monetary value of the associated unit of energy, where the monetary value is expressed in the amount of monetary tokens.

The energy tokens represent a specific amount of energy, which can be used to verify the provenance of the corresponding energy. The energy introduced into the energy distribution system is measured, and an energy token is issued for each unit of energy introduced into the energy distribution system. In one embodiment, different energy tokens may be associated with different amounts of energy.

As well known from the art, each energy token may store data relating to the delivered energy, in particular: the form of production of the delivered energy; the time of production of the delivered energy; and the location of production of the corresponding energy. For example, an energy token could indicate that the corresponding energy was generated using renewable energy, like solar energy, at a particular location and at a particular time.

Due to the present invention, renewable energy (RE) power plants or their share, such as a PV allotment, will be represented by the use of a token that represent the ownership of a RE system or a share in the RE system. In every month or other period of time, the RE power plant or PV share/allotment owner receives a certain amount of "energy credit" as a second token, they can either consume directly (to discount it from their electricity their bill) or sell to a third party.

Like that it will become very easy to sell a RE power plant share such as a PV allotment and to generate energy credit, the financial return form the PV system investment.

Consumers who need electricity, can choose to buy the PV system or allotment that covers their own electricity demand, or they can buy energy credit at discounted price to lower their utility bill.

## Claims

1. A computer system (100) for matching energy production with energy consumption through a blockchain system, the system comprising:
- a plurality of energy producers (110) to introduce energy into an energy distribution system;
- a plurality of energy consumers (120) for consuming energy received from the energy distribution system;
- an energy distribution system (150) for distributing energy from the plurality of energy producers (110) to the plurality of energy consumers (120); and
- a distributed blockchain application arranged to link energy introduced by the plurality of energy producers (110) with energy consumed by the plurality of energy consumers (120) by recording transfers of energy tokens associated with said introduced energy in a blockchain,
- wherein the distributed blockchain application is further arranged to link a monetary value paid by an energy consumer (120) for purchased energy with a monetary value paid to an energy producer (110) for sold energy by recording transfers of monetary tokens associated with said exchange of monetary value in a blockchain, and
- wherein the monetary tokens represent a monetary value expressed in real currency or cryptocurrency, and the energy tokens contain information relating to the monetary value of the associated unit of energy, wherein the monetary value of the energy unit is expressed by the amount of monetary tokens.

2. The system of claim 1, further comprising at least one additional entity providing energy sale management services for the energy producers (110) and the energy consumers (120).

3. The system of claim 1, wherein the energy producers (110), the energy consumers (120), and optionally the additional entities, are associated with a computer node (111, 121) for performing the operations of the distributed blockchain application through a communication network (160) interconnecting said nodes (111, 121).

4. The system of claim 3, wherein a node (111) associated with an energy producer (110), or optionally an additional entity, is configured to provide a full blockchain record.

5. The system of claim 3, wherein a node (121) associated with an energy consumer (120) is configured to provide a full blockchain record.

6. The system of claim 3, wherein a node (121) associated with an energy consumer (120) is configured to provide a reduced blockchain record.

7. The system of claim 1, wherein an account tree is associated with the blockchain for recording the actual balance of the monetary tokens with regard to a given smart contract established between an energy producer (110) and an energy consumer (120).

8. The system of claim 2, wherein at least one of the additional entities stores and maintains a list (182) of linked consensus blocks (180), wherein each consensus block is associated with a respective block of the system's blockchain and contains at least information relating to the account tree of the system's blockchain valid at the moment of generating the consensus block (180).

9. The system of claim 3, wherein at least one of the computer nodes (121) is configured to store only the last few transaction blocks of the system's blockchain; and to obtain, when synchronizing to the network, the entire list (182) of consensus blocks (180) for updating its local account tree (172).

10. The system of claim 3, wherein at least one of the computer nodes (121) is configured to store only the last few transaction blocks of the system's blockchain; and to obtain, when synchronizing to the network, only the last consensus block (180) for updating its local account tree (172).

11. A method for matching energy production with energy consumption through a blockchain system running on a plurality of computer nodes (111, 121) associated with at least a plurality of energy producers (110) and a plurality of energy consumers (120), the method comprising:
- identifying the production of individual units of energy by an energy producer (110);
- identifying the consumption of volumes of energy by an energy consumer (120);
- providing a plurality of energy tokens in the blockchain system, an energy token representing an individual unit of energy;
- providing a plurality of monetary tokens in the blockchain system, a monetary token representing a monetary value expressed in real currency or cryptocurrency;
- associating an amount of monetary tokens with each energy token; and
- matching, via the blockchain system, the individual units of energy produced by the energy producer with the volumes of energy consumed by the energy consumer by transferring a number of energy tokens from the energy producer to the energy consumer; and
- updating, via the blockchain system, the monetary balance of the energy producer (110) and the monetary balance of the energy consumer (120) on the basis of the amount of monetary tokens associated with the energy tokens transferred in the matching step.

12. The method of claim 11, further comprising generating, storing and maintaining, in computer node (111) of at least one energy producer (110), a list (182) of linked consensus blocks (180), wherein each consensus block is associated with a respective block of the blockchain and contains at least information relating to an account tree of the blockchain valid at the moment of generating the respective consensus block.

13. The method of claim 12, wherein at least one of the computer nodes (121) is configured to store only the last few blocks of the system's blockchain; and when synchronizing to the network, to obtain the entire list (182) of consensus blocks (180) from the computer node (111) of at least one energy producer (110) for updating its local account tree (172).

14. The method of claim 12, wherein at least one of the computer nodes (121) is configured to store only the last few blocks of the system's blockchain; and when synchronizing to the network, to obtain only the last consensus block (180) from the computer node (111) of at least one energy producer (110) for updating its local account tree (172).
